Europäisches Patentamt

European Patent Office

Office européen des brevets

(11) Veröffentlichungsnummer: **0 094 606**
**B1**

(12) **EUROPÄISCHE PATENTSCHRIFT**

(45) Veröffentlichungstag der Patentschrift:
**19.11.87**

(21) Anmeldenummer: **83104622.2**

(22) Anmeldetag: **11.05.83**

(51) Int. Cl.⁴: **G 03 B 23/10**

(54) **Diarundmagazin.**

(30) Priorität: **15.05.82 DE 8214213 U**

(43) Veröffentlichungstag der Anmeldung:
**23.11.83 Patentblatt 83/47**

(45) Bekanntmachung des Hinweises auf die Patenterteilung:
**19.11.87 Patentblatt 87/47**

(84) Benannte Vertragsstaaten:
**AT CH DE FR GB LI**

(56) Entgegenhaltungen:
**RESEARCH DISCLOSURE, Nr. 199, November 1980, Seiten 511-512, Nr. 19951, HAVANT HAMPSHIRE, (GB). "Drum-type slide magazine".**
**RESEARCH DISCLOSURE, Nr. 207, Juli 1981, Seiten 291-295, Nr. 20749, HAVANT HAMPSHIRE, (GB). "Drum-type slide magazine".**

(73) Patentinhaber: **KODAK AKTIENGESELLSCHAFT, Postfach 369, D-7000 Stuttgart-Wangen 60 (DE)**

(72) Erfinder: **Weidenbach, Willy, Nätherstrasse 127, D-7000 Stuttgart 60 (DE)**
Erfinder: **Moraw, Günter, Friedrichstrasse 73, D-7302 Ostfildern 4 (DE)**
Erfinder: **Ries, Jürgen, Ernst-Kirchner-Strasse 44, D-7302 Neilingen (DE)**
Erfinder: **Rüb, Horst, Lindenstrasse 2, D-7146 Tamm (DE)**
Erfinder: **Schumacher, Karl, Steigstrasse 1, D-7441 Unterensingen (DE)**

(74) Vertreter: **Lewandowsky, Klaus et al, Kodak Aktiengesellschaft Patentabteilung Postfach 369, D-7000 Stuttgart 60 (DE)**

## Beschreibung

Die Erfindung betrifft ein lösbar mit einem Diaprojektor verbindbares Rundmagazin mit zwischen einer inneren und einer äusseren zylindrischen Wandung angeordneten radial verlaufenden Diafächern, mit einem der inneren zylindrischen Wandung zugeordneten Bodenansatz, der mit einer mit einer projektorseitigen Spindel zusammenwirkenden Mittenbohrung versehen ist, einer unterhalb den Diafächern befindlichen mit einer Durchlassöffnung für ein Diapositiv versehenen und an der Aussenfläche des Bodenansatzes unter Friktion drehbar geführten kreisringförmigen Scheibe, einer Vorrichtung zur Verriegelung der Scheibe in der Nichtgebrauchsstellung des Magazins, in der die Durchlassöffnung der Scheibe mit einem Dialeerfach fluchtet sowie mit an der Aussenfläche des Bodenansatzes vorgesehenen federnden Haltenasen, die den Innenrand der Scheibe hintergreifen.

Aus dem DE-U 8 020 336 ist ein Rundmagazin dieser Art bekannt geworden, dessen die Drehbewegung des Magazinkörpers relativ zur Ringscheibe beeinflussende Friktionsmittel von einer die Verriegelungsvorrichtung der Scheibe beaufschlagenden Feder und einer unter der Kraft dieser Feder auf die Scheibe gedrückten Kugel gebildet sind.

Da die Reibung der lediglich an einem einzigen Punkt an der Scheibe angreifenden Friktionsmittel gering ist und überdies die Scheibe einseitig belastet ist, sind bei diesem bekannten Rundmagazin zur Erhöhung der Reibung und gleichmässigen Verteilung der Reibungskräfte in den Bereichen zwischen den an der Aussenfläche des Bodenansatzes angeordneten federnden Haltenasen zusätzlich starre Nocken vorgesehen. Dies hat jedoch zur Folge, dass die Scheibe eine wellenförmige Durchwölbung erfährt und dass durch die starren Friktionsmittel grosse Reibungskräfte bei der Drehbewegung des Magazinkörpers auf der Scheibe auftreten.

Der Erfindung liegt die Aufgabe zugrunde, das bekannte Rundmagazin so weiterzubilden und zu verbessern, dass einseitig auftretende Reibungskräfte vermieden werden und dass trotz mehrerer auf der Scheibe angreifender Friktionsmittel weder eine Durchwölbung der Scheibe erfolgt noch zu starke Reibungskräfte auftreten.

Die Aufgabe wird erfindungsgemäss dadurch gelöst, dass zur Erhöhung der Reibung zwischen der Scheibe und dem Bodenansatz den federnden Haltenasen Friktionsmittel zugeordnet sind, die an der Oberfläche der Scheibe unter federnder Vorspannung anliegen. Dabei sind die Friktionsmittel unmittelbar im Bereich jeder Haltenase angeordnet.

In einer vorteilhaften Ausgestaltung der Erfindung ist der Aussenfläche des Bodenansatzes eine umlaufende Auflagefläche für die Scheibe zugeordnet. Als Friktionsmittel sind in der Auflagefläche, im Bereich der Haltenasen durch Aussparungen gebildete elastisch nachgiebige Stege bzw. Finger mit in Richtung der Haltenasen sich erstreckenden Nocken ausgebildet.

Weitere Merkmale und Vorteile der Erfindung ergeben sich aus der Beschreibung mehrerer in der Zeichnung dargestellter Ausführungsbeispiele.

Es zeigen:

Fig. 1 den Gegenstand der Erfindung in einem teilweise dargestellten Diarundmagazin von der Unterseite gesehen in einer perspektivischen Darstellung,

Fig. 2 den Gegenstand der Erfindung gemäss Fig. 1 in einem Schnitt entlang der Linie I–I,

Fig. 3 den Gegenstand der Erfindung gemäss Fig. 1 in einer Seitenansicht in Pfeilrichtung X im Schnitt,

Fig. 4 mehrere Ausführungsbeispiele des Gegenstands der Erfindung in einem teilweise dargestellten Diarundmagazin von der Unterseite gesehen in einer perspektivischen Darstellung und

Fig. 5 eines der Ausführungsbeispiele des Gegenstands der Erfindung gemäss Fig. 4 in einem Schnitt entlang der Linie II–II.

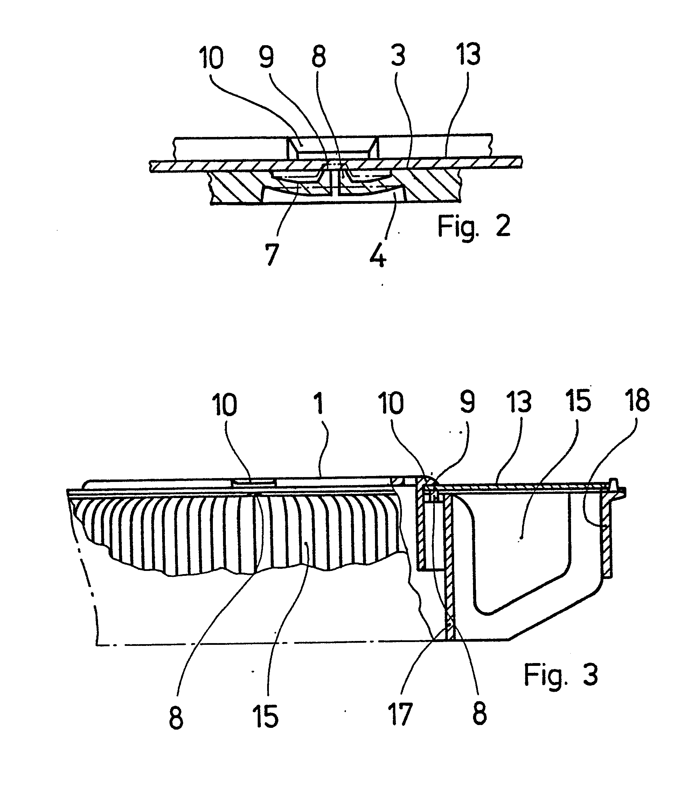

Das im wesentlichen in Fig. 3 auf dem Kopf stehend dargestellte Diarundmagazin weist eine innere zylindrische Wandung 17 und eine äussere zylindrische Wandung 18 auf, zwischen denen die radial verlaufenden Diafächer 15 angeordnet sind. Der inneren zylindrischen Wandung 17 ist ein Bodenansatz 1 zugeordnet, der eine mit einer projektorseitigen Spindel zusammenwirkende Mittenbohrung 11 aufweist. Unterhalb der Diafächer 15 befindet sich eine mit einer Durchlassöffnung für ein Diapositiv versehene kreisringförmige Scheibe 13, die an der Aussenfläche 2 des etwas vorspringenden Bodenansatzes 1 drehbar geführt ist.

Zur Halterung der Scheibe 13 sind an der Aussenfläche 2 des Bodenansatzes 1 drei gleichmässig über deren Umfang verteilte federnde Haltenasen 10 vorgesehen. Bei der Montage der Scheibe 13 wird diese auf die Einführschrägen der Haltenasen 10 aufgesetzt. Diese weichen bei Aufdrücken der Scheibe 13 federnd zurück, schnappen anschliessend über die Scheibe und hintergreifen deren Innenrand.

Ein nicht näher dargestellter Verriegelungshebel, der zwischen der Innenseite der inneren zylindrischen Wandung 17 und der Innenseite des Bodenansatzes 1 angeordnet ist, ragt mit einem Rastfinger 20 in den Bereich einer Öffnung 12 des Bodenansatzes 1 hinein. Der Rastfinger 20 liegt am Innenrand der Scheibe 13 an bzw. er greift rastend in eine Aussparung 14 am Innenrand der Scheibe 13 ein und verriegelt diese.

Wird das Magazin mit verriegelter Scheibe 13 in einen Projektor eingesetzt, so verschwenkt eine durch die Mittenbohrung 11 des magazinseitigen Bodenansatzes 1 hindurchragende projektorseitige Spindel (nicht dargestellt) den Verriegelungshebel, wobei dessen Rastfinger 20 die Aussparung 14 verlässt und die Scheibe 13 freigibt.

Wenn in der Funktionsstellung des Magazins der Magazinkörper gegenüber der Scheibe 13, die durch projektorseitige Mittel festgehalten ist, verdreht wird, sorgen Friktionsmittel für eine ausreichende Reibung zwischen der Scheibe 13 und dem Magazinkörper. Um gleichmässig verteilte Reibungskräfte zu erhalten, sind diese Friktionsmittel den drei federnden Haltenasen 10 zugeordnet. Hierbei liegen die Friktionsmittel unter federnder Vorspannung an der Oberfläche der Scheibe 13 an.

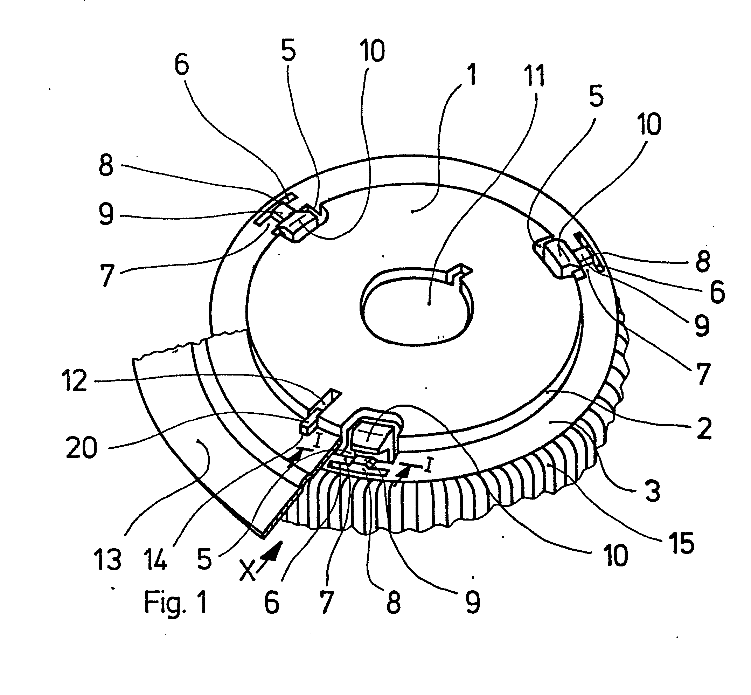

Wie insbesondere die Fig. 1 zeigt, ist der Aussenfläche 2 des Bodenansatzes 1 eine umlaufende Auflagefläche 3 zugeordnet, auf die die Scheibe 13 aufliegt.

In einem ersten Ausführungsbeispiel sind in der Auflagefläche 3 im Bereich der drei Haltenasen 10 durch Aussparungen 4, 5 und 6 gebildete, elastisch nachgiebige Stege 7 vorgesehen, die mittig jeweils mit einem in Richtung einer Haltenase 10 sich erstreckenden Nocken 8 versehen sind.

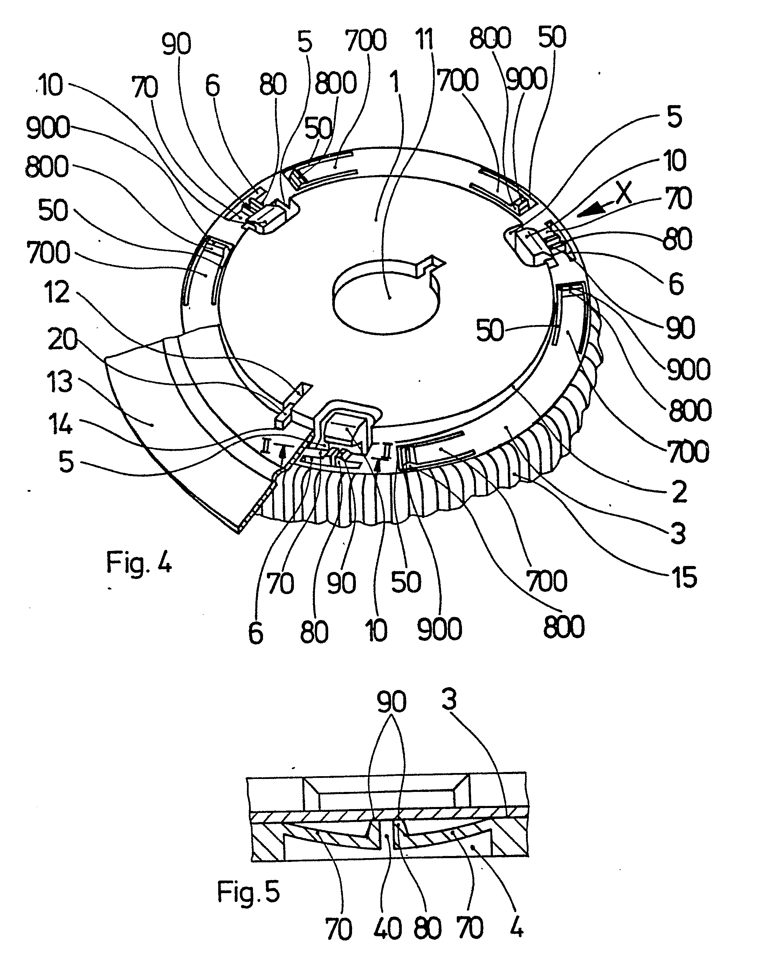

Wie aus den Fig. 4 und 5 ersichtlich ist, kann der in den Fig. 1 und 2 gezeigte Steg 7 mittig im Bereich des Nockens 8 durch einen Querschlitz 40 getrennt sein, so dass in einem weiteren Ausführungsbeispiel nach den Fig. 4 und 5 in der Auflagefläche 3 im Bereich der Haltenasen 10 durch Aussparungen 4, 5, 6 und den Querschlitz 40 gebildete, elastisch nachgiebige Finger 70 mit in Richtung der Haltenasen 10 sich erstreckenden Nocken 80 ausgebildet sind.

Wie aus der Fig. 4 des weiteren ersichtlich ist, sind in der Auflagefläche 3 den unmittelbar im Bereich der Haltenasen 10 angeordneten Fingern 70 jeweils zwei durch Aussparungen 50 gebildete, elastisch nachgiebige Zungen 700 mit in Richtung der Scheibe 13 sich erstreckenden Nocken 800 zugeordnet. Diese federelastischen Zungen 700 könnten auch den in Fig. 1 gezeigten Stegen 7 zugeordnet sein. Es ist ohne weiteres denkbar, die federelastischen Stege 7 bzw. Finger 70 auch wegzulassen und als weiteres Ausführungsbeispiel in der Auflagefläche 3 im Bereich der Haltenasen 10 lediglich diese federelastischen Zungen 700 vorzusehen.

Wie im wesentlichen den Fig. 2 und 5 zu entnehmen ist, ist die Flexibilität der Stege 7 bzw. Finger 70 und/oder Zungen 700 so gewählt, dass die unter Vorspannung an der Oberfläche der Scheibe 13 anliegenden Reibungsflächen 9 bzw. 90 und/oder 900 ihrer Nocken 8 bzw. 80 und/oder 800 in ihrer Wirkstellung in der Ebene der Auflagefläche 3 liegen. Hierbei ist in der Wirkstellung der Nokken 8 bzw. 80 und/oder 800 der Abstand zwischen der Auflagefläche 3 und den Haltenasen 10 der Dicke der Scheibe 13 angepasst.

Die Flexibilität der Stege 7 bzw. Finger 70 und/oder Zungen 700 kann, wie der Fig. 3 zu entnehmen ist, aber auch so gewählt sein, dass die unter Vorspannung an der Oberfläche der Scheibe 13 anliegenden Reibungsflächen 9 bzw. 90 und/oder 900 der Nocken 8 bzw. 80 und/oder 800 in ihrer Wirkstellung oberhalb der Ebene der Auflagefläche liegen. Hierbei entspricht dann der Abstand zwischen den Reibungsflächen 9 bzw. 90 und/oder 900 und den Haltenasen 10 der Dicke der Scheibe 13.

**Patentansprüche**

1. Lösbar mit einem Diaprojektor verbindbares Rundmagazin mit zwischen einer inneren (17) und einer äusseren zylindrischen Wandung (18) angeordneten radial verlaufenden Diafächern (15), mit einem der inneren zylindrischen Wandung (17) zugeordneten Bodenansatz (1), der mit einer mit einer projektorseitigen Spindel zusammenwirkenden Mittenbohrung (11) versehen ist, einer unterhalb der Diafächer (15) befindlichen mit einer Durchlassöffnung für ein Diapositiv versehen und an der Aussenfläche (2) des Bodenansatzes (1) unter Friktion drehbar geführten kreisringförmigen Scheibe (13), einer Vorrichtung zur Verriegelung der Scheibe (13) in der Nichtgebrauchsstellung des Magazins, in der die Durchlassöffnung in der Scheibe (13) mit einem Dialeerfach fluchtet sowie mit an der Aussenfläche (2) des Bodenansatzes (1) vorgesehenen federnden Haltenasen (10), die den Innenrand der Scheibe (13) hintergreifen und dass zur Erhöhung der Reibung zwischen der Scheibe (13) und dem Bodenansatz (1) Friktionsmittel (7, 8; 70, 80; 700, 800) angeordnet sind, die an der Oberfläche der Scheibe (13) unter federnder Vorspannung anliegen, und dass die Aussenfläche (2) des Bodenansatzes (1) eine umlaufende Auflagefläche (3) für die Scheibe (13) aufweist, dadurch gekennzeichnet, dass die Friktionsmittel in der Auflagefläche (3) im unmittelbaren Bereich der Haltenasen als elastisch nachgiebige Mittel ausgebildet sind.

2. Rundmagazin nach Anspruch 1, dadurch gekennzeichnet, dass die Friktionsmittel als durch Aussparungen (4, 5, 6 bzw. 4, 5, 6, 40) gebildete elastische nachgiebige Stege (7) bzw. Finger (70) mit in Richtung der Haltenasen (10) sich erstrekkende Nocken (8 bzw. 80) ausgebildet sind.

3. Rundmagazin nach Anspruch 1, dadurch gekennzeichnet, dass mindestens drei im Bereich der Aussenfläche (2) des Bodenansatzes (1) verteilte Haltenasen (10) mit diesen zugeordneten Friktionsmitteln (7, 8; 70, 80) vorgesehen sind.

4. Rundmagazin nach Anspruch 1, dadurch gekennzeichnet, dass als Friktionsmittel den Stegen (7) bzw. Fingern (70) weitere durch Aussparungen (50) in der Auflagefläche (3) im Bereich der Haltenasen (10) gebildete, elastisch nachgiebige Zungen (700) mit in Richtung der Scheibe (13) sich erstreckenden Nocken (800) zugeordnet sind.

5. Rundmagazin nach den Ansprüchen 1 bis 4, dadurch gekennzeichnet, dass die Flexibilität der Stege (7) bzw. Finger (70) und/oder Zungen (700) so gewählt ist, dass die unter Vorspannung an der Oberfläche der Scheibe (13) anliegenden Reibflächen (9 bzw. 90) und/oder (900) der Nocken (8 bzw. 80) und/oder (800) in ihrer unter Vorspannung stehenden Wirkstellung in der Ebene der Auflagefläche (3) liegen (Fig. 2 und 5).

6. Rundmagazin nach den Ansprüchen 1 bis 5, dadurch gekennzeichnet, dass die Flexibilität der Stege (7) bzw. Finger (70) und/oder Zungen (700) so gewählt ist, dass die unter Vorspannung an der Oberfläche der Scheibe (13) anliegenden Reibflächen (9 bzw. 90) und/oder (900) der Nocken (8 bzw.

80) und/oder (800) in ihrer unter Vorspannung stehenden Wirkstellung oberhalb der Ebene der Auflagefläche (3) liegen (Fig. 3).

7. Rundmagazin nach den Ansprüchen 1 bis 3 und 6, dadurch gekennzeichnet, dass in der Wirkstellung der Nocken (8 bzw. 80) und/oder (800) der Abstand zwischen der Auflagefläche (3) und den Haltenasen (10) der Dicke der Scheibe (13) angepasst ist (Fig. 2 und 5).

8. Rundmagazin nach den Ansprüchen 1 bis 3 und 7, dadurch gekennzeichnet, dass in der Wirkstellung der Nocken (8 bzw. 80) und/oder (800) der Abstand zwischen den Reibflächen (9 bzw. 90) und/oder (900) und den Haltenasen (10) der Dicke der Scheibe (13) entspricht (Fig. 3).

## Claims

1. Circular slide tray which can be releasably connected with a slide projector and has radially extending slide compartments (15) arranged between an inner (17) and an outer cylindrical wall (18), a bottom portion (1) associated with the inner cylindrical wall (17) and provided with a central bore (11) which cooperates with a spindle provided on the projector, an annular plate (13) positioned below the slide compartments (15), provided with a slide passage opening and rotatably guided with friction on the outer surface (2) of said bottom portion (1), a device for locking said plate (13) in the inoperative position of the slide tray in which the slide passage opening in said plate (13) is in alignment with an empty slide compartment as well as resilient holding noses (10) provided on the outer surface (2) of said bottom portion (1) for engaging behind the inner edge of said plate, friction means (7, 8; 70, 80; 700, 800) being provided between the plate (13) and the bottom portion (1) for increasing the friction, said friction means being spring-biased into contact with the surface of the plate (13), and the outer surface (2) of the bottom portion (1) having a circumferential support surface (3) for the plate (13), characterized in that the friction means are arranged in the form of resiliently yielding means in the support surface (3) directly in the area of the holding noses.

2. Circular slide tray according to claim 1, characterized in that the friction means are designed as resiliently yielding projections (7) and fingers (70) respectively having bent-off portions (8 and 80 respectively) extending in the direction of the holding noses (10), said projections or fingers being formed by recesses (4, 5, 6 and 4, 5, 6, 40 respectively).

3. Circular slide tray according to claim 1, characterized in that at least three holding noses (10) with associated friction means (7, 8; 70, 80) are distributed over the area of the outer surface (2) of the bottom portion (1).

4. Circular slide tray according to claim 1, characterized in that further resiliently yielding tongues (700) formed by recesses (50) in the support surface (3) in the area of the holding noses (10) and having bent-off portions (800) extending in the direction of the plate (13) are provided as friction means associated with the projections (7) and fingers (70) respectively.

5. Circular slide tray according to claims 1 to 4, characterized in that the flexibility of the projections (7) and fingers (70) respectively and/or tongues (700) is selected such that the friction surfaces (9 and 90 respectively) and/or (900) of the bent-off portions (8 and 80 respectively) and/or (800) which are spring-biased into contact with the surface of the plate (13) are positioned in the plane of the support surface (3) (Figs. 2 and 5) when in their biased operative positions.

6. Circular slide tray according to claims 1 to 5, characterized in that the flexibility of the projections (7) and fingers (70) respectively and/or tongues (700) is selected such that the friction surfaces (9 and 90 respectively) and/or (900) of the bent-off portions (8 and 80 respectively) and/or (800) which are spring-biased into contact with the surface of the plate (13) are positioned above the plane of the support surface (3) when in their biased operative positions (Fig. 3).

7. Circular slide tray according to claims 1 to 3 and 6, characterized in that in the operative positions of the bent-off portions (8 and 80 respectively) and/or (800), the distance between the support surface (3) and the holding noses (10) is adapted to the thickness of the plate (13) (Figs. 2 and 5).

8. Circular slide tray according to claims 1 to 3 and 7, characterized in that in the operative positions of the bent-off portions (8 and 80 respectively) and/or (800), the distance between the friction surfaces (9 and 90 respectively) and/or (900) and the holding noses (10) corresponds to the thickness of plate (13) (Fig. 3).

## Revendications

1. Magasin circulaire conçu pour être relié de façon amovible à un projecteur de diapositives, possédant des compartiments à diapositives (15) qui s'étendent radialement entre des parois cylindriques interne (17) et externe (18), un fond rapporté (1) qui est coordonné à la paroi cylindrique interne (17) et est pourvu d'un trou central (11) pour la réception et la coopération avec une broche du projecteur, un disque (13) en forme de couronne circulaire, situé sous les compartiments à diapositives (4), pourvu d'une ouverture pour le passage d'une diapositive et guidé sur la surface externe (2) du fond (1) pour pouvoir tourner à frottement, un dispositif pour verrouiller le disque (13) à la position de non-usage du magasin, où l'ouverture de passage du disque (13) est alignée avec un compartiment à diapositive vide, des crochets élastiques de maintien (10) prévus sur la surface externe (2) du fond (1) et s'accrochant derrière le bord intérieur du disque (13), ainsi que, pour augmenter le frottement entre le disque (13) et le fond (1), des moyens de friction (7, 8; 70, 80; 700, 800) qui s'appliquent sous précontrainte élastique contre la surface du disque (13), la surface externe (2) du fond (1) présentant une face d'appui circonférentielle (3) pour le disque (13), caractérisé en ce que les moyens de friction sont réalisés dans la face d'appui (3), à proximité immédiate des crochets de maintien (10), sous la forme de moyens élastiques souples.

2. Magasin selon la revendication 1, caractérisé en ce que les moyens de friction sont réalisés comme des lamelles (7) ou des doigts (70) élastiques, délimités par des évidements (4, 5, 6 ou 4, 5, 6, 40), avec des saillies (8 ou 80) s'étendant en direction des crochets.

3. Magasin selon la revendication 1, caractérisé en ce qu'il comprend au moins trois crochets de maintien (10) répartis sur la surface externe (2) du fond (1) et auxquels sont coordonnés des moyens de friction (7, 8; 70, 80).

4. Magasin selon la revendication 1, caractérisé en ce que les lamelles (7) ou les doigts (70) sont combinés avec des moyens de friction supplémentaires constitués par des languettes élastiques (700) qui sont pourvues de saillies (800) s'étendant en direction du disque (13) et qui sont formées par des évidements (50) prévus dans la face d'appui (3) dans la région des crochets de maintien (10).

5. Magasin selon les revendications 1 à 4, caractérisé en ce que la flexibilité des lamelles (7), des doigts (70) et/ou des languettes (700) est choisi de manière que les faces de frottement (9 ou 90 et/ou 900) des saillies (8 ou 80 et/ou 800), faces qui sont appliquées sous précontrainte contre la surface du disque (13), soient situées dans le plan de la face d'appui (3) (Fig. 2 et 5).

6. Magasin selon les revendications 1 à 5, caractérisé en ce que la flexibilité des lamelles (7), doigts (70) et/ou languettes (700) est choisie de manière que les faces de frottement (9 ou 90 et/ou 900) des saillies (8 ou 80 et/ou 800) soient situées au-dessus du plan de la face d'appui (3) à leur position de travail, où elles sont sous précontrainte (Fig. 3).

7. Magasin selon les revendications 1 à 3 et 6, caractérisé en ce que, à la position de travail des saillies (8 ou 80 et/ou 800), la distance entre la face d'appui (13) (Fig. 2 et 5).

8. Magasin selon les revendications 1 à 3 et 7, caractérisé en ce que, à la position de travail des saillies (8 ou 80 et/ou 800), la distance entre les faces de frottement (9 ou 90 et/ou 900) et les crochets de maintien (10) correspond à l'épaisseur du disque (13) (Fig. 3).

Fig. 1

Fig. 2

Fig. 3

Fig. 4

Fig. 5